# EUROPEAN PATENT APPLICATION

(11) **EP 3 415 840 A2**
(43) Date of publication of application: **19.12.2018**
(21) Application number: 18173903.8
(22) Date of filing: 23.05.2018
(51) Int. Cl.: F25B 31/00, F25B 49/00, F25B 5/02

(54) **DETECTION OF LACK OF REFRIGERANT IN A COOLING SYSTEM HAVING MULTIPLE COOLING LOCATIONS**

(30) Priority: 23.05.2017 IL 25245217
(71) Applicant: SmartGreen Ltd., 7670102 Rehovot (IL)
(72) Inventor: Rona, Nathan M., 7628431 Rehovot (IL); Fromm, Jonathan M., 7642227 Rehovot (IL); Freiberg, Nati, 81503 Yavneh (IL)
(74) Representative: Modiano, Micaela Nadia

(57) **Abstract**

A method for the detection of refrigerant starvation in a cooling system comprising at least one refrigerant compressor serving multiple cooling locations, and a suction line leading to the refrigerant compressor(s). The method determines whether local refrigerant starvation exists in each cooling location, then calculates whether the level of all cooling locations experiencing local refrigerant starvation exceeds one or more predetermined levels and finally determines that, if the calculated level of cooling locations with local refrigerant starvation exceeds one predetermined level, or exceeds a second predetermined level in combination with a calculated high suction line superheat, then there is a likelihood of refrigerant starvation in the central system. The determination of local refrigerant starvation in each cooling location may be calculated using determination of filtered usage, degree of opening of the expansion valve, level of evaporator superheat, and difference in air temperature across the evaporator.

## Description

### FIELD OF THE INVENTION

The present invention relates to the field of cooling systems including refrigeration and air conditioning systems, especially such systems which involve a plurality of cooling locations.

### BACKGROUND

A refrigeration system, such as typically used in supermarkets, cold storage, and food preparation factories, or a central air conditioning system, comprises one or more compressors and one or more cooling locations, and each cooling location may be a food-display case, or a room or any other local region that has to be cooled. Such systems are referred to as cooling systems, and the terms refrigeration system and cooling system may be used alternatively and equivalently in this disclosure and as claimed.

Each cooling location may comprise an evaporator and an expansion valve. Many systems described in the prior art comprise only one compressor and one cooling location, although a large number of systems with multiple cooling locations and multiple compressors exist. Such systems are described in this disclosure as comprising a central system which comprises one or more compressors and a plurality of cooling locations.

If the amount of refrigerant supplied to an evaporator is not sufficient to provide the maximum possible amount of cooling, then there will be symptoms of refrigerant starvation.

Cooling locations may experience starvation due to lack of refrigerant in the system, blockages or component malfunctions, among other causes. When the amount of refrigerant in a system is critically low, it will cause refrigerant starvation in multiple cooling locations in the system.

Symptoms of refrigerant starvation may appear as increased suction line superheat, high expansion valve opening(s), reduced cooling capacity of evaporator(s), high evaporator superheat(s), and in cases where suction line pressure is not directly controlled, reduced suction pressure. Often, suction line pressure is in fact directly controlled by increasing or decreasing compressor capacity, either in steps or continually.

In general, the following existing conditions have been used to detect lack of refrigerant or refrigerant starvation in cooling systems comprising at least one compressor and at least one cooling location:
High suction superheat at compressor inlet
High evaporator superheat
Electronically controlled expansion valve open more than normal
Difference in temperature between evaporator inlet and evaporator outlet less than normal or previous difference(s)
Low suction pressure or low suction pressure combined with normal discharge pressure and high evaporator outlet air temperature
Lack of sub-cooling in liquid line
Low refrigerant level in liquid receiver
Increase in system pressure more than that which is attributed to change in ambient temperature during an automatic evacuation test
Refrigerant detectors detecting presence of refrigerant in air or cooling media (water, water-glycol, brine etc.)
Detection of the sound of a leak using ultrasonic microphones.

The following patents and patent applications describe some of the methods used in the prior art for lack of refrigerant detection in a system based on measurement of operational parameters of the system:
Jin-Ho Jeong, LG Electronics Inc., in US Patent Publication 2005/0056031 A1 (published 2005) In this reference, there is shown a method such that when a difference between the temperatures sensed by the evaporator inlet and outlet temperature sensors becomes above a predetermined value, a control unit determines that there is a refrigerant leak in the evaporator region.

Edward D. Pettitt, General Motors Corporation, in US Patent No. 4,745,765 A (issued 1988) A signal effecter provides a low charge signal at predetermined refrigerant superheat and ambient air temperatures. High suction superheat while ambient air temperature is normal indicates a refrigerant leak.

Glenn E. Tomasov, Annette M. Schmidt, General Motors Corporation, in US Patent No. 5,150,584 A (issued 1992) In this reference, thermistors measure evaporator inlet and outlet temperatures and compressor body temperature. When the differential between inlet and outlet temperatures is below a first threshold and the compressor temperature is above a second threshold, very low refrigerant charge is indicated and the compressor is turned off. Also, if compressor temperature reaches a critical value, the compressor is turned off.

Roy M et al., Parker-Hannifin Corporation in US Patent No. 6,460,354 B2 (issued 2002) In this reference, the control circuit detects a low charge condition of the working fluid when the state signal indicates the working fluid superheat exceeds a first predetermined threshold over a first predetermined time with the expansion device in a fully open condition. If the superheat exceeds a first predetermined threshold, an alarm is given and if yet higher, the system is stopped.

Carbon Trust, Food and Drink Federation "Operational Efficiency Improvements for Refrigeration Systems" (July 2007) In this reference, low suction pressure and high suction temperature (i.e. high suction superheat) are used as an indicator for lack of refrigerant, as fully described in: http://www.ior.org.uk/ior_/images/pdf/general/REI-G3%200perational%20Improvements%20-%20Final%20Jul-07.pdf

Payman Sadegh, Mohsen Farzad, Carrier Corporation in US Patent No. 7,188,482 B2 (issued 2007) In this reference, a low refrigerant charge indicator uses large average pulse-modulated valve opening or low suction pressure as observed during the first few minutes (e.g. 10-20 minutes) after the compressor speed (rpm) exceeds a threshold (e.g. 40%-50% of its maximum rpm), excluding the first 0-2 minutes of transient data, to detect low refrigerant charge.

In International Patent Application Publication No. WO/2010/007448 (published 21.01.2010) by Theodoros Efthymiou, a method is disclosed for detecting leaks in units installed on transportation means wherein low suction pressure is used in combination with normal discharge pressure and high evaporator outlet air temperature to detect refrigerant leaks. The method compares the measured suction pressure and discharge pressures to normal values for these based on ambient air temperature and other operating parameters such as type of refrigerant and engine revolutions in relation to compressor revolutions.

Many prior art methods have one or more disadvantages. Many of the methods suggested deal only with a specific evaporator/cooling location (i.e. unitary systems) and do not consider central refrigeration plant systems with multiple evaporators/cooling locations and one or more compressors. Local starvation in one or more of the cooling locations may be due to a local issue such as a blockage in the liquid line branch leading to a cooling location, a blocked filter, or a stuck expansion device, among other causes. Local starvation may also be caused by a central system issue such as a leak anywhere in the system, a lack of fill, or a blockage in the main liquid line. It would therefore be desirable, with such a system, to identify the source of the starvation and differentiate between central starvation and local starvation. Existing devices and methods that detect starvation in unitary systems would generally not be sufficient to deduce central starvation even if they were applied to most or all cooling locations in a multiple cooling location system.

Furthermore, many prior art methods do not distinguish thermal overload from local refrigerant starvation. A high evaporator superheat and a large valve opening may be an indicator of a thermal overload, for example, due to a large input of warm goods into a freezer, or it may be an indicator of local refrigerant starvation. It would be desirable to differentiate between these outcomes.

Additionally, many prior art systems are able to detect lack of refrigerant or refrigerant starvation, only when refrigerant has reached critically low levels, i.e. when performance of system is already reduced. In addition to reduction of performance and increased energy consumption, lack of refrigerant may even cause physical damage to elements in the system, for example, damage to a compressor due to overheating.

Finally, many previous methods do not use historical data and analysis of such data, such as using statistical spreads of operating parameters. Without historical data, patterns cannot be detected and important differentiations cannot be made, such as between a sporadic valve opening which is not critical, or a prolonged valve opening which is critical and due to starvation.

There therefore exists a need for a method for detecting lack of refrigerant or refrigerant starvation in multi-cooling location cooling systems, which overcomes at least some of the disadvantages of prior art systems and methods.

The disclosures of each of the publications mentioned in this section and in other sections of the specification, are hereby incorporated by reference, each in its entirety.

### SUMMARY

The present disclosure describes new exemplary systems and methods for detecting local and central refrigerant starvation in multi-cooling location cooling systems. These methods may be applied using a system comprising a server that runs an analytic platform which completes at least one of logical programs and jobs, a reporting module, and visualization services where the completion of logical programs or jobs is displayed to the user. The server may be a 'cloud server' or on a locally installed computer.

In a system with one or more cooling locations, there may be one controller for each cooling location or one controller serving multiple cooling locations, and at least one controller serving the compressor(s). The controllers may collect data from sensors that measure operating parameters such as valve opening, temperature and pressure, and one or more controllers may also change operating parameters, e.g. to change temperature settings, manage defrost cycles, or stage compressors. In alternative embodiments, the controllers may be used for optimization of operating parameters, such as suction pressure or compressor head pressure. The server may be connected through a communication interface to the compressor controllers and cooling location controllers. If the server is a 'cloud server', a local computer on site is typically used as a communication gateway or relay station between the server and the controllers.

The communication interface depends on the type of controllers and the communication options available on the controllers. Through the communication interface, the server is able to read sensor values for all relevant parameters on all cooling location and compressor controllers in the system. The analytic platform is then able to collect this data and use it to perform methods as explained further in this disclosure.

An exemplary method described in this disclosure combines data measurement of each valve opening, determination of each evaporator's superheat, measurement of air temperature at each evaporator inlet and outlet, and determination of the suction line superheat, along with historical data to obtain an overall picture of the potential refrigerant availability throughout the system. This overall picture allows early detection of leaks, blockages, or malfunctions, and enables differentiation between central starvation and local starvation.

When there is a local refrigerant starvation in a cooling location, the refrigerant evaporator superheat (defined as the temperature difference between refrigerant temperature at the evaporator refrigerant outlet and the saturation temperature of the refrigerant) at the evaporator refrigerant outlet will increase, and the temperature difference between evaporator air inlet temperature and air outlet temperature will decrease. The expansion valve opening will also be large.

In an exemplary method of this disclosure, these factors are used to determine if local starvation is present in one or more cooling locations in a cooling system, and if so, it may be determined whether this starvation is local, or part of, and therefore due to, a central system refrigerant starvation. The determination of local starvation may be performed in a representative group of cooling locations in the cooling system. In this disclosure and as claimed, a representative group of cooling locations is understood to be a group of cooling locations, which may be a portion or the entire group of cooling locations in a cooling system, which is large enough to provide meaningful data with regards to the determination of central starvation. For example, if there are 50 cooling locations in a system, it may not be necessary to collect data on all of the locations; rather, a representative group might be used, and the patterns detected would be extrapolated to the entire system. Any group of cooling locations in a cooling system that are tested for local starvation is also understood to be a representative group.

When a predetermined relatively significant proportional level or number of the cooling locations in a representative group, experience local refrigerant starvation simultaneously over a predetermined duration of time, this is defined as Multiple Evaporator Refrigeration Starvation (MERS), which is one indicator of refrigerant starvation in the central system. Throughout this disclosure "MERS level" is defined as the proportional level of the cooling locations experiencing local refrigerant starvation simultaneously over a predetermined duration of time. To clarify, when MERS level is very low, e.g. below a predetermined percentage, MERS is regarded as not occurring. The term relative level or proportional level, when applied to cooling locations, is defined as being a quantitative level, such as a percentage. The differentiation between local and central starvation is realized through MERS calculation or a combination of MERS and suction line superheat (SSH) calculations, with or without compressor cooling (e.g. liquid injection to suction port) measurements.

Such a method can also differentiate between thermal overload and local starvation. When cooling demand peaks, typically when warm goods are loaded into the refrigerated display cabinets, or during high ambient temperature and humidity, it is expected that the cooling capacity will be at its highest, i.e. for a given airflow the air temperature drop across the coil will be highest, while increased evaporation of the refrigerant due to the heat load will give higher than normal superheat value associated with a large valve opening. However, if the evaporator superheat is large while the air temperature drop across the coil is small and there is a large valve opening, this could indicate local starvation. The term thermal overload, as used in this disclosure, is meant to exclude the possibility of local starvation. The disclosed methods, using constant monitoring of current operating parameters, allow detection of local or central refrigerant starvation due to leaks, lack of refrigerant, or other causes, before there is serious decline in the performance of the system, or even damage.

In a situation in which local refrigerant starvation is caused by lack of refrigerant in the central system, refrigerant starvation will ultimately happen in many or all cooling locations. However, such starvation may initially be apparent in only one or a few cooling locations, but the number of cooling locations with starvation may progressively increase over time following a lack of refrigerant in the central system. Initially, the starvation may be limited to a number of more critical cooling locations, for example, cooling locations with higher cooling load, cooling locations far from the compressor, or cooling locations with small diameter liquid supply lines. Therefore, in the initial time following a lack of refrigerant in the central system, there is a need to differentiate between local problems such as a blocked filter, and central system problems such as lack of refrigerant fill. In one exemplary method, upon detecting starvation in a particular cooling location, it can be determined whether this is part of a central system failure, or if it is caused by a local issue. As previously mentioned, Multiple Evaporator Refrigeration Starvation (MERS) is one indicator of refrigerant starvation in the central system. This predetermined relatively significant MERS level may be any relative indicator such as percentage of cooling locations experiencing starvation, a probability associated with this percentage, a level within a specified range, or a level associated with weighted values.

Such exemplary methods may further use historical data in several ways. A previous determination of a normal temperature difference during continued operation for each evaporator may be compared to the current differences between each evaporator inlet and outlet air temperature, in order to detect deviations from the predetermined normal temperature differences of each evaporator, allowing early and accurate detection of local starvation. Likewise, the valve opening, evaporator superheat, and the occurrence or absence of filtered usage as defined by predetermined parameters, may be evaluated over a sliding window of time to check if conditions are sustained, for example for 25 minutes or more per hour, to avoid false diagnosis of starvation based on sporadic or transient conditions. The term filtered usage is used throughout this disclosure and is thuswise claimed, to mean predetermined times, situations, values or levels during which the method for detection of potential local refrigerant starvation, as shown hereinbelow in the Detailed Description, may be accomplished to give a meaningful outcome. Sliding windows related to the detection of local starvation may be especially useful in the event that a cooling location is not experiencing filtered usage. For example, if a cooling location is undergoing a defrost cycle, a window may allow time for the defrost cycle to finish and then for potential local starvation to be detected. As another example, if a cooling location is experiencing a defrost cycle or its door is open, this would be considered a period of unfiltered usage and the system would be programmed to result in a negative outcome with regards to local starvation diagnosis, regardless of other factors. The proportional level of local cooling locations that are starved (MERS) may be evaluated over a sliding window of a predetermined amount of time for detection of central starvation, for example, over three hours. The suction line superheat and compressor cooling as measured, for example, by liquid injection to suction ports, may also be evaluated over a predetermined amount of time, for example, over three hours to obtain an average.

The many benefits of using historical data are certainly not limited to this example of using compilation of a large enough data set so as to provide meaningful results. In alternative embodiments, historical case data can be analyzed, for example, to detect if there is a pattern of increasing cooling location failures, such analysis including or excluding rate calculations, which could potentially lead to central starvation.

In another exemplary method, historical data can also be used to determine if the suction line superheat is increasing towards levels that might indicate central starvation, or to determine if a valve opening in any cooling location is larger than its historical opening values. Historical data could be further used to evaluate liquid levels, the difference between evaporator inlet and outlet air or refrigerant temperature in each cooling location, or any other factors that could be used to indicate a high likelihood of local or central starvation. These analyses may comprise a determination of one or more normal values by gathering data over time, in order to compare to current data, or may comprise development of trends or patterns which may be used for prediction. Additionally, probabilities of starvation may be associated with operational parameters, (such as MERS, valve opening, air temperature difference across evaporator, and liquid level), and then these probabilities may be combined, analyzed weighted, or averaged in different ways in order to achieve multiple warning levels or more accurate detection of local or central starvation than that which could be achieved by fixed thresholds for the parameters.

Exemplary methods of the present disclosure continuously monitor sensor readings, both on cooling location controllers which collect data from the various sensors within each cooling location, and on compressor controllers which collect data from compressor related sensors, and then combine data from all of these readings to analyze together. Data may then be stored on a local server or in the cloud. According to further exemplary methods of the present application, one or more of the controllers, whether associated with a compressor or a cooling location, may use accumulated data to change criteria for certain operational parameters, such as temperature set-points, defrosting cycle procedures, refrigerant charge top-up, etc., upon detecting predetermined diagnostic values or patterns. The controllers may also communicate with each other to achieve the best criteria for the operational parameters. Thus such systems will have a broader overview of the whole system and the ability to control it, than prior art which generally obtains data from a single cooling locations and/or a single compressor.

Continuously monitoring all cooling location controllers allows for early detection of local refrigerant starvation. Refrigerant starvation of a cooling location is identified by a combination of large opening of the electronic expansion valve, high superheat at the evaporator outlet, and low cooling capacity as identified by a small temperature difference between the inlet and outlet air temperature of the evaporator coil. These factors may be identified either at one point in time or over a window of time, such as a sliding window. If at any point in time, refrigerant starvation of a cooling location is identified, this data is stored referencing the relevant cooling location(s). As previously mentioned, an alternative method may assign statistical probabilities to valve opening, evaporator superheat, and air temperature difference, instead of set values in order to provide multiple warning levels.

To detect refrigerant starvation in the central system, a combination of MERS and Suction line Superheat (SSH), as calculated from measured temperature of refrigerant at suction line to the saturation temperature of refrigerant at the suction line, may be used. MERS may be defined as a relative high level of cooling locations starved as compared to a predetermined value, for example 40% of cooling locations experiencing local starvation, and there may be two or more predetermined MERS levels to allow for use of MERS in combination with other factors. As detailed in one method of this disclosure, there are two predetermined MERS levels (e.g. percentage thresholds); one is used alone and the other is used in combination with SSH. If, at any point in time, MERS is detected, and simultaneously high SSH is calculated as compared to a predetermined value, a warning for lack of refrigerant in the central system is given. If MERS reaches an excessive level, a warning for lack of refrigerant in the central system may be given regardless of the level of SSH. Compressor cooling may be used as an alternative to, or in combination with SSH. An alternative exemplary method, instead of using single predetermined values, may assign statistical probabilities to percentages of cooling locations starved and to SSH levels in order to provide multiple warning levels for central starvation. When a warning for lack of refrigerant in the central system is issued, the stored data regarding local warnings is directed toward the central system warning and would thus not be used in further methods to diagnose one or more local starvations, at least at the point in time that the central warning is issued.

There is thus provided in accordance with an exemplary implementation of the methods described in this disclosure, a method for the detection of central refrigerant starvation in a refrigeration system comprising at least one refrigerant compressor serving multiple cooling locations, and a suction line leading to the at least one refrigerant compressor, the method comprising:
determining the suction line superheat;
selecting a representative group of cooling locations in the central refrigeration system, in each of which, it is to be determined if local refrigerant starvation exists;
determining for each cooling location in the representative group, whether local refrigerant starvation exists; and
determining that there is central refrigerant starvation in the system, if either of:
   (i) a proportional level of all cooling locations experiencing local refrigerant starvation in the representative group, exceeds a first predetermined level, or
   (ii) the suction line superheat exceeds a predetermined superheat level, and a proportional level of all cooling locations experiencing local refrigerant starvation in the representative group exceeds a second predetermined level.

In accordance with further implementations of this method, the determination of central refrigerant starvation in a refrigeration system may be corroborated by repeating a number of times over a preselected time interval, at least one of
(a) calculating if the proportional level of all cooling locations experiencing local refrigerant starvation in the representative group exceeds the first predetermined level, and (b) calculating if the suction line superheat exceeds the predetermined superheat level.

An alternative implementation involves a method for the detection of central refrigerant starvation in a refrigeration system comprising at least one refrigerant compressor serving multiple cooling locations, a suction line leading to the at least one refrigerant compressor, at least one liquid injection valve located in the suction line, the opening of the liquid injection valve being controlled to maintain suction line superheat below a predetermined superheat level, the method comprising:
determining the opening of the liquid injection valve;
selecting a representative group of cooling locations in the refrigeration system, in each of which, it is to be determined if local refrigerant starvation exists;
determining for each cooling location in the representative group, whether local refrigerant starvation exists; and
determining that there is central refrigerant starvation in the system, if either of:
   (i) a proportional level of all cooling locations experiencing local refrigerant starvation in the representative group exceeds a first predetermined level, or
   (ii) the opening of the liquid injection valve exceeds a predefined level, and a proportional level of all cooling locations experiencing local refrigerant starvation in the representative group exceeds a second predetermined level.

In accordance with further implementations of this method, the determination of central refrigerant starvation in a refrigeration system may be corroborated by repeating a number of times over a preselected time interval, at least one of:
(a) calculating if the proportional level of all cooling locations experiencing local refrigerant starvation in the representative group exceeds the first predetermined level, and
(b) calculating if the opening of the liquid injection valve is above the predefined level.

In any of the above described methods, when the determination of central refrigerant starvation is corroborated by repeating calculations over a preselected time interval, the preselected time interval may be longer than the time needed to complete a defrost cycle in all of the cooling locations in the representative group.

Furthermore, in any of the above mentioned implementations, each of the cooling locations in the representative group may comprise an expansion valve, an evaporator, a cooling coil, and a cold temperature sensor, and in such a case, the step of determining whether local refrigerant starvation exists in a cooling location in the representative group may comprise:
(a) measuring the opening of the expansion valve and determining if the opening is greater than a first predetermined value;
(b) calculating the evaporator superheat and determining if it is greater than a second predetermined value;
(c) obtaining the temperature difference between the evaporator air inlet temperature and the temperature indicated by the cold temperature sensor, and determining at least one of
   (i) whether the deviation of the temperature difference from a normally expected temperature difference is greater than a third predetermined value, and
   (ii) whether the temperature difference is less than a fourth predetermined value; and
(d) concluding that local starvation exists in the cooling location if the opening of the expansion valve exceeds the first predetermined value and the evaporator superheat exceeds the second predetermined value, and if at least one of (i) the deviation of the temperature difference from the normally expected temperature difference is greater than the third predetermined value and (ii) the temperature difference is less than the fourth predetermined value.

The cold temperature sensor used in these methods may be either (i) an evaporator outlet temperature sensor or (ii) a cooling coil temperature sensor.

According to yet further implementations for determination of whether local refrigerant starvation exists in a cooling location in the representative group, steps (a) to (c) may be performed in a cooling location over a period of time excluding one or more of:
(i) the time during which a defrost cycle is taking place at the cooling location;
(ii) a predetermined length of time after termination of the defrost cycle of the cooling location;
(iii) the time during which a door of the cooling location is open;
(iv) a predetermined length of time after any door of the cooling location has been opened; and
(v) a predetermined length of time after the commencement of cooling of the cooling location. Additionally or alternatively, in each of one or more cooling locations, the method may comprise repeating each of steps (a) to (c) a number of times over a preselected window of time, in order to corroborate the determination of local refrigerant starvation.

In some implementations of the determination of local refrigerant starvation, the normally expected temperature difference for a cooling location in the representative group may be determined by:
a) obtaining temperature differences between the evaporator air inlet temperature and the temperature indicated by the cold temperature sensor multiple times over an interval of time;
b) establishing a distribution curve of the temperature differences; and
c) determining the normally expected temperature difference to be one of (i) a normal temperature difference based on the distribution curve and (ii) a mean average temperature difference based on the distribution curve and (iii) a predetermined percentile of the distribution curve.

Yet further implementations of the above described methods may comprise determining that there is thermal overload in the cooling location if the opening of the expansion valve exceeds the first predetermined value and the evaporator superheat exceeds the second predetermined value, and if (i) the deviation of the temperature difference from the normally expected temperature difference is not greater than the third predetermined value and (ii) the temperature difference is not less than the fourth predetermined value.

According to any of the above mentioned methods of determination of local refrigerant starvation, if it is determined that local starvation exists in one or more cooling locations in the representative group, the method may further comprise generating one or more warnings of local starvation. Additionally, if it is determined that there is central refrigerant starvation in the system, the method may comprise issuing a central warning and suppressing any existing warnings of local starvation.

There is further provided in accordance with an exemplary implementation of the systems described in this disclosure, a central refrigeration system comprising:
at least one refrigerant compressor, a plurality of cooling locations comprising a representative group, a suction line, and at least one module adapted to obtain data from the at least one compressor and from the cooling locations and to transmit at least a portion of the data to at least one processor, wherein the at least one processor is adapted to:
   for each cooling location in the representative group, determine whether local refrigerant starvation exists;
   determine suction line superheat; and
   determine that there is refrigerant starvation in the central system, if either:
      (i) a proportional level of cooling locations with local refrigerant starvation in the representative group exceeds a first predetermined level, or
      (ii) the suction line superheat exceeds a predetermined superheat level, and a proportional level of cooling locations with local refrigerant starvation in the representative group exceeds a second predetermined level.

In exemplary implementations of this system, the determining that there is central refrigerant starvation in the system may be corroborated by repeating a number of times over a preselected time interval, at least one of:
calculating if the proportional level of all cooling locations experiencing local refrigerant starvation in the representative group exceeds the fist predetermined level, and
calculating if the suction line superheat exceeds the predetermined superheat level. The preselected time interval may be longer than the time needed to complete a defrost cycle in all of the cooling locations in the representative group.

According to a further exemplary implementation of the above described systems, each of the cooling locations in the representative group may comprise an expansion valve, an evaporator, a cooling coil, and a cold temperature sensor, and determining whether local refrigerant starvation exists in a cooling location in the representative group may comprise:
(a) determining if a measured opening of the expansion valve is greater than a first predetermined value;
(b) calculating the evaporator superheat and determining if it is greater than a second predetermined value;
(c) obtaining the temperature difference between the evaporator air inlet temperature and the temperature indicated by the cold temperature sensor, and determining at least one of
   (i) whether the deviation of the temperature difference from a normally expected temperature difference is greater than a third predetermined value, and
   (ii) whether the temperature difference is less than a fourth predetermined value; and
(d) concluding that local starvation exists in the cooling location if the opening of the expansion valve exceeds the first predetermined value and the evaporator superheat exceeds the second predetermined value, and if at least one of (i) the deviation of the temperature difference from the normally expected temperature difference is greater than the third predetermined value and (ii) the temperature difference is less than the fourth predetermined value.

The cold temperature sensor may be either an evaporator outlet temperature sensor or a cooling coil temperature sensor.

In additional implementations of the above described exemplary systems, steps (a) to (c) may be performed in a cooling location over a period of time excluding one or more of:
(i) the time during which a defrost cycle is taking place at the cooling location;
(ii) a predetermined length of time after termination of the defrost cycle of the cooling location;
(iii) the time during which a door of the cooling location is open;
(iv) a predetermined length of time after a door of the cooling location has been opened; and
(v) a predetermined length of time after the commencement of cooling of the cooling location.

According to any of the above mentioned systems, the processor may be further adapted to determine that there is thermal overload in the cooling location if the opening of the expansion valve exceeds the first predetermined value and the evaporator superheat exceeds the second predetermined value, and if (i) the deviation of the temperature difference from the normally expected temperature difference is not greater than the third predetermined value and (ii) the temperature difference is not less than the fourth predetermined value.

### BRIEF DESCRIPTION OF THE DRAWINGS

The present invention will be understood and appreciated more fully from the following detailed description, taken in conjunction with the drawings in which:
Fig. 1 shows a central refrigeration system;
Fig. 2 shows a close up of a cooling location;
Fig. 3 shows a flowchart of an exemplary method overview;
Fig. 4 shows a flowchart of detection of potential local refrigerant starvation;
Fig. 5 shows a flowchart of confirmation of local refrigerant starvation;
Fig. 6 shows a flowchart of detection of potential refrigerant starvation in central system;
Fig. 7 shows a flowchart of confirmation of refrigerant starvation in central system; and
Fig. 8 shows an exemplary method of how liquid injection is used to maintain low suction line superheat in a refrigeration system.

### DETAILED DESCRIPTION

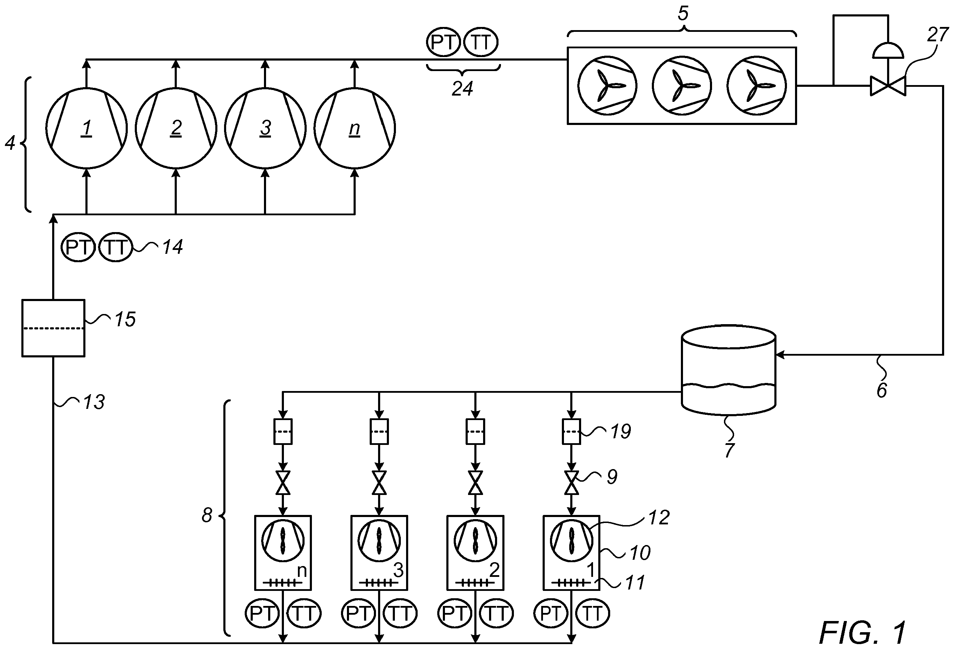

Figure 1 shows an example of a typical central refrigeration system. It comprises the following components: one or more compressors (1, 2, 3....n) whose function is to compress the refrigerant, the compressors generally being located in a compressor rack 4, one or more condensers 5 whose function is to condense the compressed refrigerant and extract the unwanted heat therefrom, the condensers being situated outside the area being cooled such as on a roof, a liquid line 6 for transferring the cooled compressed refrigerant for storage in a liquid receiver 7. The condensed high pressure liquid refrigerant is then distributed through a pipe network to the cooling locations 8.

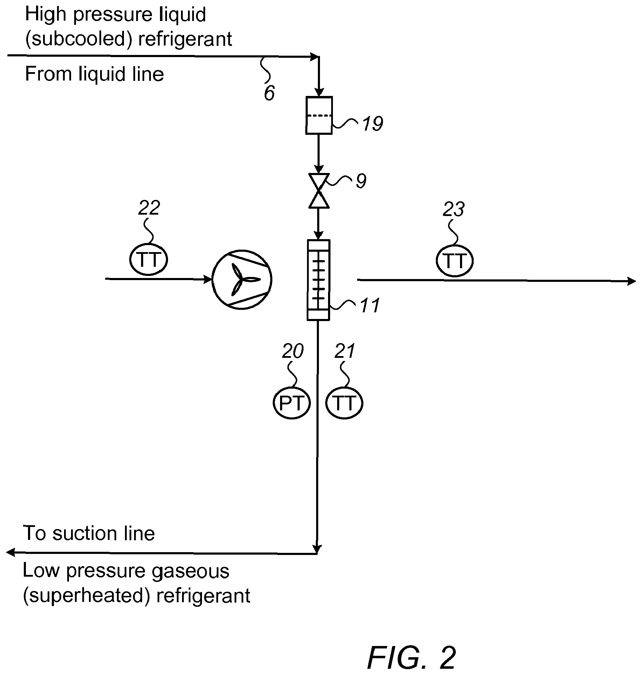

The whole of the system function is controlled by one or more controllers, receiving information from the numerous sensors in the system, whether sensing temperatures, pressures, valve openings, flow rates, elapsed times, and the like, and providing inputs to the various controlled functions of the system, such as compressors, fans in the cooling locations and the condenser, and in particular, the opening of the expansion valves. Because of the large number of such inlet signal lines and outlet instruction lines that the controller or controllers need for complete operation of the system, the controllers are not shown physically in Figs. 1 and 2, in order to simplify the illustration of the operation and flow paths of the system itself, but are understood to be present and connected to the various sensors and controlled elements.

A cooling location may be a refrigerator case, a freezer, a cold room or an air conditioned space which is generally separated from ambient air by walls, and a door or air-curtain. A cooling location typically comprises one or more cooling coils 11 in an enclosed space, a cooling "coil" being understood in this disclosure as being any shaped passageway in which the refrigerant absorbs heat from the cooling location. Often fans 12 are used to force cooled air across the cooling coil 11; however, there are also systems which use coils that rely on natural convection and thus do not have fans.

Typically, an expansion valve (also known as metering device) 9, meters refrigerant into the evaporator 10. If the temperature of the cooling location or the evaporator coil is below zero degrees Celsius, the cooling location will also have some kind of defrost mechanism, for example, electrical heating elements (not shown in Fig.l).

The cooling coil 11 serves as a heat-exchanger between the air-flow forced across the coil by the fan 12 and the refrigerant that flows through the tube of the cooling coil 11. As the refrigerant absorbs heat from the cooling location it goes through a phase-change from liquid to vapor. In this process, the temperature of the air that passes across the cooling coil 11 will be reduced.

Vapor from the cooling coil 11, after extracting heat from the cooling location, travels through the suction line network 13 back to the compressor rack 4 where it is again compressed to a high pressure and forced to the condenser 5 where it is condensed back to liquid that flows to the liquid receiver, for repeating the entire cycle.

Throughout the heat exchange process, the potential for the cooling coil to cool the cooling location depends on the temperature difference between the refrigerant in the coil and the temperature of the air flowing across the coil, for a given air flow and refrigerant flow. Fig. 2, which is to be understood within the context of Fig. 1, shows the heat exchange process in a close up of a typical cooling location. An air temperature sensor 22 at the evaporator air inlet and a cold temperature sensor 23 at the evaporator air outlet measure air temperature values, allowing the difference between these values to be calculated, with the difference indicating the level of cooling the evaporator provides to the cooling location at a given airflow. As an alternative, the evaporator outlet air temperature sensor may be replaced with a temperature sensor within the evaporator, such as in contact with the coil. Throughout this disclosure and as claimed, hereinbelow, the sensor that measures the cooled temperature of the evaporator, whether it measures the outlet air temperature or the coil temperature, is referred to as the cold temperature sensor.

The temperature of the refrigerant is a function of the refrigerant's saturation temperature and the amount of super-heat. As refrigerant flows through the coiling coil and absorbs heat from the cooling location, the refrigerant evaporates, changing phase from liquid to gas. As long as part of the refrigerant is liquid, the heat absorption and evaporation process is occurring at constant temperature, which is the saturation temperature. When the refrigerant flow has absorbed enough heat such that refrigerant has completely changed phase from liquid to gas, and the refrigerant absorbs further heat, the refrigerant becomes superheated. From this point onwards, the heat-exchange between air flow, coil, and refrigerant is a sensible heat-exchange process where every reduction in air-temperature will require a temperature increase in refrigerant temperature. The superheat is limited upwards by the difference between the refrigerant saturation temperature and refrigerant temperature in the coil. In order to determine what state the refrigerant is in and what its cooling potential is, there may be a pressure sensor 20 and a temperature sensor 21 at the evaporator outlet to measure refrigerant temperature and pressure. The measurements from sensors 20 and 21 may be used in combination to calculate evaporator superheat, as is known in the art.

In order to maximize the cooling potential of the cooling coil 11, at a given pressure, the coil should be maximally used for evaporation (latent heat absorption rather than sensible heat absorption), and this is done by feeding enough refrigerant to the coil to keep the suction superheat to a minimum. If it is desired to reduce the amount of heat absorbed by the coil, this can be done by either increasing the suction pressure (e.g. by using a suction pressure regulator valve at coil evaporator outlet), or by reducing the amount of refrigerant fed to the coil.

Thermal and electronic expansion valves 9 typically control (or meter) the refrigerant feed from the high pressure liquid line 6 to cooling coil 11 automatically to keep a minimum suction superheat at the evaporator outlet. Some cooling location controllers (not shown in Fig. 1) are also able to control an electronic expansion valve which meters the refrigerant flow to keep a desired cooling location temperature. The controller switches from "minimum superheat mode" to "temperature maintenance mode" when the temperature of the cooling location approaches the desired temperature. In some situations, the controller may direct the expansion valve opening to increase, and this may be an indication of local starvation. The opening of the expansion valve is generally determined by the control signal input to it from the controller, but the valve may have a sensor mounted on it to directly determine the opening, or to confirm that the commanded opening is indeed achieved. It is to be understood that throughout this disclosure, and as claimed, terms such as the determination of the opening of a valve are intended to be interpreted either as direct sensing of the valve opening, or as ascertaining the control signal applied to the valve by the controller, and are both valid for detecting starvation. For instance, in the case of the expansion valve opening, starvation can occur if the valve does not fully open but the control command is for 100% opening. The command signal is part of the control loop that tries to maintain or reduce the superheat at the evaporator outlet by modulation of the expansion valve. If superheat is high, it indicates insufficient refrigerant flow; therefore in the case of starvation detection, the assumption of the valve being 100% open according to the command signal is correct for starvation detection, regardless if the actual opening degree is 100% or less.

There are pressure sensors and temperature sensors located at essential points throughout the system to provide information to controllers (not shown in the drawings) for analysis of data and control of the operation of the system. For instance, pressure measurement sensors (PT) and temperature measurement sensors (TT) 14 are situated in the suction line 13 at the inlet of the compressor rack. The suction line pressure sensor may be used to enable calculation of suction line superheat and to maintain control of pressure at the inlet to the compressor rack via compressor rack controller(s). Additional pressure and temperature sensors 24 may be located in the compressor outlet line.

Cooling location controllers (not shown in the Figures) may collect data from temperature sensors for evaporator inlet air temperature 22, evaporator outlet air temperature 23, evaporator outlet refrigerant pressure 20, and evaporator outlet refrigerant temperature 21. Alternatively, the refrigerant pressure sensor may be replaced with an evaporator inlet refrigerant temperature sensor (not shown in Figure 2). Cooling location controllers, using inputs from the refrigerant superheat calculated from the temperature and/or pressure measurements of the refrigerant in the cooling location, in addition to temperature measurements of the cooling location, may be used to control expansion valve opening. If an evaporator is not fed with sufficient refrigerant for a specific heat load, local refrigerant starvation is present. In such a case, the electronic expansion valve exhibits a high degree of opening. If a large amount of heat enters a cooling location, for example, a thermal overload resulting from a loading of a quantity of hot goods into a refrigerated case, the evaporation rate inside that evaporator should increase, and in order to maintain an adequate level of superheat at the evaporator outlet, that cooling location controller should increase the expansion valve opening in order to increase the liquid refrigerant mass flow. In this situation, due to the large amount of liquid refrigerant flowing through the evaporator, the difference in air temperature across the evaporator remains high.

As an example of the processes by which the desired temperatures are achieved by control of the refrigerant pressures, if the desired temperature of the low temperature cooling locations in a supermarket is -18°C, then in order to maintain this temperature and continuously remove heat from the cooling locations, an evaporation temperature of -26°C may, for instance, be used, and the compressor rack suction saturation temperature set-point will be approximately - 29°C to accommodate any suction line pressure losses. In a specific refrigerant material called R404, a temperature of -29° C is achieved with a pressure of approximately 30 psi, so if this refrigerant were used in this example, the pressure at the suction line should be set at 30psi. The rack controller could load or unload compressor stages per the actual pressure measured, which could fluctuate, for example between 27 and 33 psi.

In some systems there may also be filter-driers 19 in the supply lines leading to each expansion valve. A filter 15 may also be installed in the suction line. There may also be a condenser pressure regulator ("flooding valve") 27 in the main liquid supply line which regulates the condenser pressure by, for a period of time, restricting the refrigerant flow at the condenser outlet, thereby flooding part of the condenser. If such a pressure regulator fails or the limiting pressure is incorrect, it may cause central system starvation.

When there is a local refrigerant starvation in a cooling location, the refrigerant evaporator superheat, (defined as the temperature difference between refrigerant temperature at the evaporator refrigerant outlet and the saturation temperature of the refrigerant), at the evaporator refrigerant outlet will increase, and the temperature difference between evaporator air inlet temperature and air outlet temperature will decrease. The expansion valve opening will also be opened wide. In an exemplary method of this disclosure, these factors are used to determine if local starvation is present in one or more cooling locations, and if so, it may be determined whether this starvation is local, or part of, and therefore due to, a central system refrigerant starvation. This differentiation is realized through MERS calculation or a combination of MERS and SSH calculations, with or without compressor cooling (e.g. liquid injection to suction port) measurements.

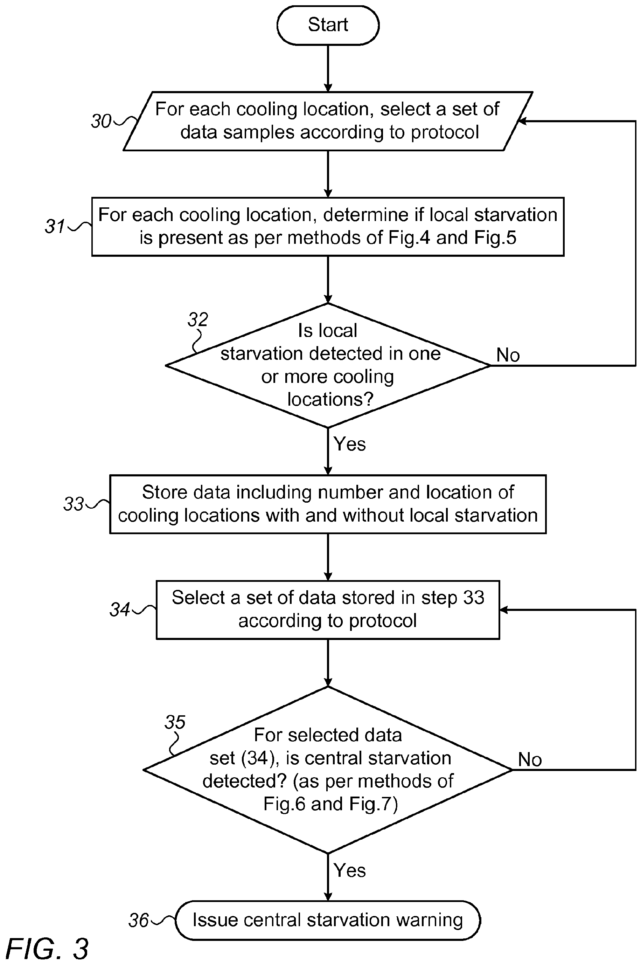

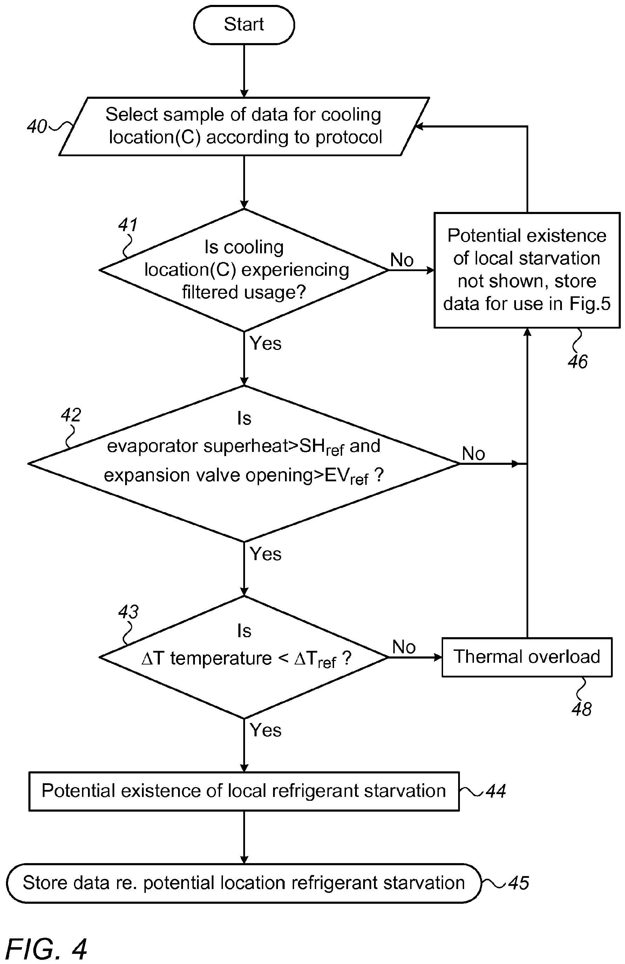

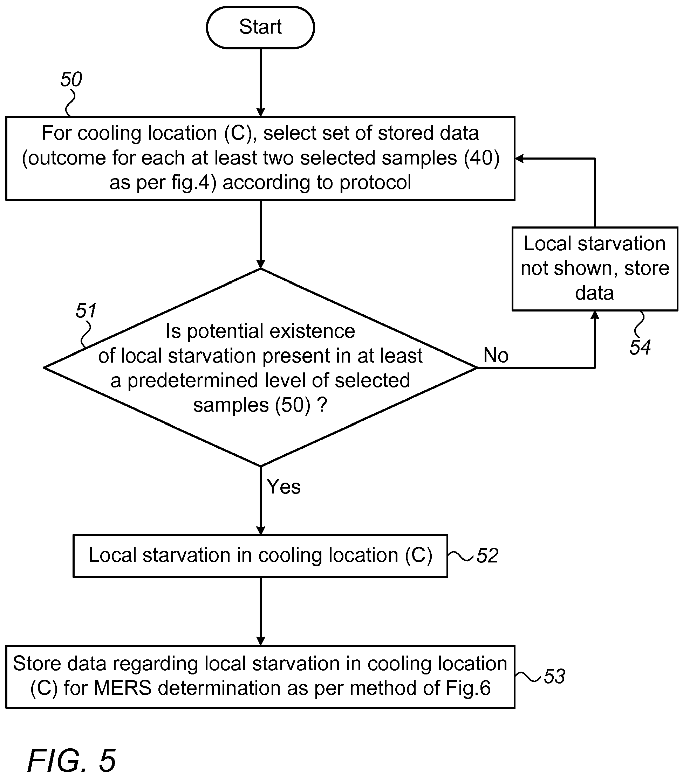

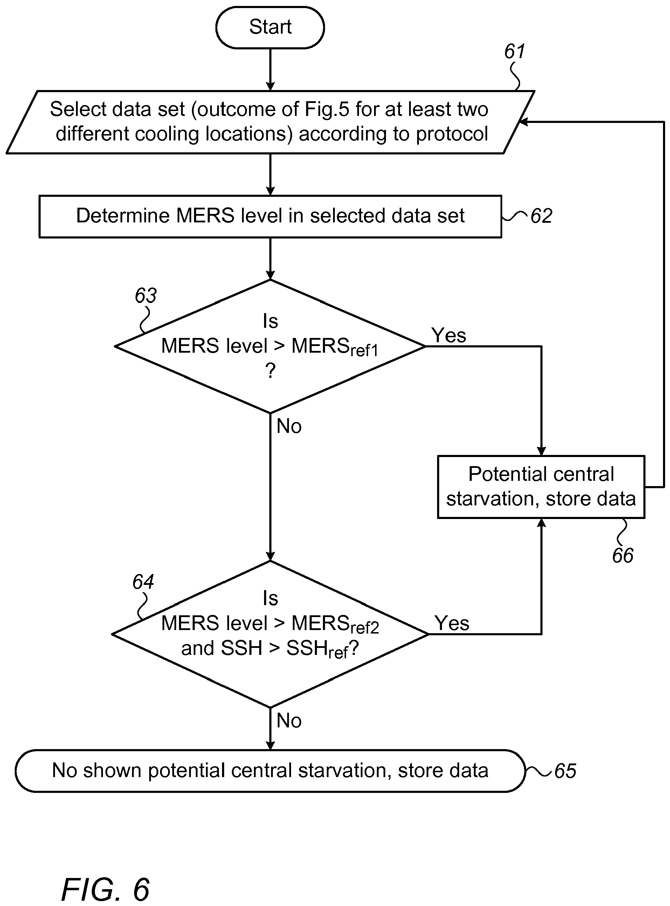

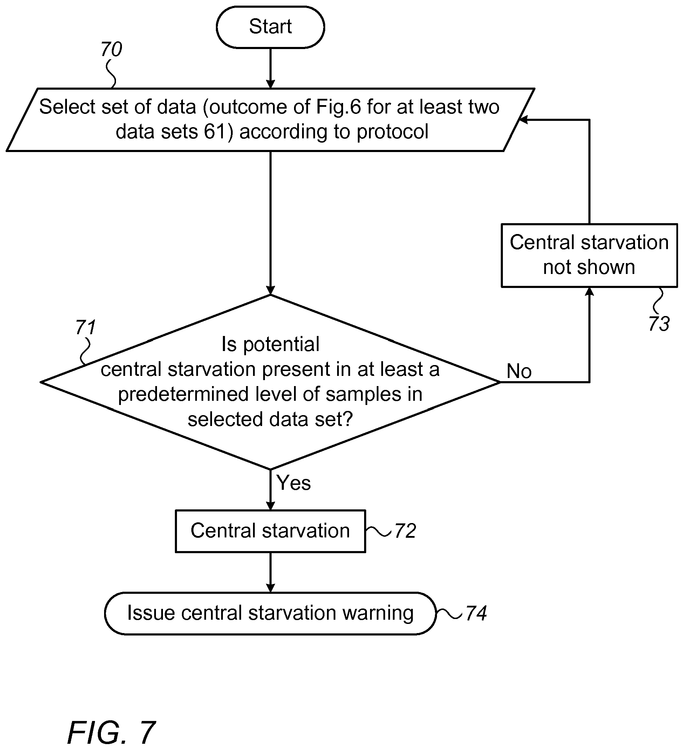

Figure 3 shows an overview of one exemplary method in this disclosure. First, data is collected according to a protocol 30 from each cooling location. This data may include determination of filtered usage, measurements of valve opening(s), air temperature at evaporator inlet(s) and outlet(s), and pressure and temperature of refrigerant at evaporator outlet(s). Protocol may include collecting data at specified time intervals, such as once every thirty seconds, or it may include collecting data according to specified number of samples, and in all cases it is not dependent on detection of local starvation(s). In step 31 the data is used to determine if local starvation exists in each cooling location. The details of step 31 are further detailed in Figures 4 and 5. If local starvation is detected in one or more cooling locations 32, data is collected and stored regarding the number and location of cooling locations with and without local starvations 33. If local starvation is not detected in one or more cooling locations 32, further data is collected according to protocol 30 to allow early detection of local starvation. Any data collected regarding the number and location of local starvations 33 may be used to calculate MERS level. Upon detection of one or more local starvations, a set of data is selected 34, such set as being defined according to protocol, (e.g. one sample from each cooling location), and this data indicates in which cooling location(s) local starvation exists. According to further exemplary methods of the present application, this information may be a factor resulting in a local starvation warning to be issued, allowing the user to check the system for problems that may have caused the local starvation(s), such as a blockage in a filter or a malfunction in an expansion valve. Unlike many prior art systems, this method comprises the additional step of differentiating between local starvation and central starvation 35 by using a combination of MERS level and duration, and SSH. Step 35 is further detailed in Figures 6 and 7. If central starvation is detected in the data set 35, a central warning is issued 36 and all local warnings are suppressed. This information allows the user to check for problems that cause central starvation, such as lack of refrigerant fill, blockage in the liquid distribution system, or a malfunctioning condenser pressure regulator. However, if one or more local starvations are detected but central starvation is not detected 35, further data regarding MERS and SSH is collected according to protocol (e.g. at intervals) 34 to allow for early detection of central starvation, while the local starvation information may allow the user to pursue different causes inherent to issues that are not centralized (and for which different recommendations may be provided to the user).

Diagnosis of potential local refrigerant starvation in a single cooling location is shown in Figure 4. First, a sample of data is collected according to protocol 40 which contains information regarding expansion valve opening, evaporator superheat, and air temperature difference across the evaporator. Then it must be determined whether the cooling location is experiencing filtered usage 41. Filtered usage may comprise times when defrost cycles are not taking place and when the door of a cooling location is not opened, or a period of time following these events. If usage is determined to be unfiltered, this data is stored as a negative detection of potential local refrigerant starvation 46 and further data is collected according to protocol 40. If usage is determined to be filtered 41, it is then determined whether both the evaporator superheat and the expansion valve opening are above predetermined values, indicated as SH_{ref} and EV_{ref} accordingly 42. As mentioned previously, this is merely one example, and there may be other ways of evaluating whether evaporator superheat and expansion valve opening are large, such as in a probabilistic sense. Evaporator superheat may be calculated from the difference between the temperature of refrigerant at the evaporator outlet and the saturation temperature of the refrigerant at the evaporator outlet, or may be measured indirectly through pressure (since the evaporation temperature is a function of pressure and of the type of refrigerant used).

If one or more of these values are not excessive 42, this is stored as a negative conclusion of potential local refrigerant starvation 46. If both of these values are excessive 42, i.e. more than a set value, an analysis of the change in temperature across the evaporator is made 43, which is the temperature difference between the inlet air temperature and the cold temperature. This analysis may use, for example, a historical determination over time of a normal temperature difference and then a conclusion regarding the amount of standard deviation of the current temperature difference from the normal temperature difference to accommodate for natural differences in the operational conditions of each evaporator over time. ΔT_{ref} in this example is the normal temperature difference for this cooling location as determined from historical data. If the cooling capacity of the evaporator is at least adequate (i.e. change in temperature is above a predetermined value), this is an indication that a thermal overload 48 may be taking place. In this case, local refrigerant starvation is not a concern 46 and further data is collected according to protocol 40. However, if evaporator superheat and expansion valve openings are both excessive, in combination with a small change in air temperature across the evaporator, indicating low cooling capacity of evaporator, this is an indication that potential local refrigerant starvation is present 44 and data indicating the time and location of the local starvation is then stored 45 for further use in determining whether or not central system starvation is present. The method of Figure 4 may be used alone (i.e. a single sample), in which case "potential existence of local starvation" is viewed as "local starvation", or in conjunction with Figure 5 (i.e. over a window of time).

Figure 5 shows an exemplary method for strengthening the determination of presence of local refrigerant starvation in a single cooling location, or the lack thereof, by using a set of stored data containing samples that have been accumulated according to protocol, for example, over a time window. In step 50 a set of stored data is selected containing the outcome of at least two samples 40 from the same cooling location as used in the method of Figure 4. If potential local starvation is present in more than a predetermined relative level (e.g. percentage) of selected samples 51, then local starvation in the cooling location is confirmed 52 and this data is stored 53 for use in MERS determination as per the method of Figure 6. If potential local starvation is present in no selected samples or in below a predetermined level of samples, this data is stored as a negative for local starvation 54, and a new set of stored data is selected according to protocol 50. A predetermined level as defined in step 51 may be a set value or may be determined through probabilistic, weighting, or other analytical methods.

If the local refrigerant starvation is caused by a lack of refrigerant in the central system, refrigerant starvation is likely to happen in a plurality of cooling locations, though not in all cooling locations initially, due to the fact that each cooling location is fed with refrigerant according to its size and other individual operational requirements or needs. However, if the problem causing a lack of refrigerant is not resolved, more of the cooling locations in the system should experience starvation. Besides the increase in suction super-heat at the compressor rack suction inlet, the lack of refrigerant in the central system will often also result in at least one of increased cooling requirements for each compressor, such as the need for increased liquid injection to suction line, and increased cooling with external cooling media such as water or air.

It therefore is necessary, upon detecting one or more local starvations, to differentiate between local refrigerant starvation and refrigerant starvation in a central system, and one exemplary method of doing this is shown in Figure 6. First, a data set is selected according to a protocol 61, for example, at regular intervals of time. This data may include the outcome of the method of Fig. 5 for at least two different cooling locations, and may comprise information on the number and locations of local starvations detected. From this data, MERS level in the selected data set is calculated 62. A higher MERS level indicates a greater likelihood that a starvation is central. This level may be, for example, a percentage or a probability associated with a percentage. If the MERS level is above a first predetermined level 63, e.g. MERS_{ref1}, potential central starvation is confirmed, this data is stored in step 66, for use in the procedure shown in Figure 7, and a new data set is selected according to protocol 61.

If MERS level is not above a first predetermined level 63, it is then determined whether MERS is above a second predetermined level and simultaneously SSH is above a predetermined level 64. If both these conditions are met, potential central starvation is confirmed, this data is stored 66 and a new set of data is selected according to protocol 61. For example, if a predetermined level of MERS is 30% and a predetermined value of SSH is 30 degrees Celsius, and if both these levels are exceeded simultaneously, central starvation may be diagnosed and a warning issued. If both these conditions are not met 64, then there is a negative output for potential central starvation and this data is stored 65, and a new data set is collected according to protocol 61. SSH may have been previously calculated by determining the difference between suction line temperature and saturation temperature of refrigerant at the suction line, which is a function of the pressure and the type of refrigerant. This method may further include the factor of measured compressor cooling, such as liquid injection to suction port, either as a substitute for or in addition to SSH. Other exemplary combinations of MERS and SSH may be a weighted sum of MERS level and SSH level, a weighted average or statistical probabilities. Weighting can for example be according to the sizes of the cooling location and respective level of evaporation superheat and valve opening degree. The method of Figure 6 may stand alone, in which case "potential central starvation" is viewed as "central starvation", or may be used in combination with the method of Figure 7.

Figure 7 shows how central starvation may be confirmed using a selected set of data, which may comprise the outcome of the method of Figure 6 for at least two data sets 61 and is defined according to protocol 70. Such protocol may be, for example, a period of time long enough to avoid a large influence of misleading data, for example, due to sporadic local starvations (i.e. due to a sporadic valve opening). It may then be determined if potential central starvation is present in above a predetermined relative level of samples within the selected data set 71. If so, central starvation may be confirmed 72 and a central system starvation warning is issued 74. However, if there are no samples with an output of potential central starvation, or an amount of samples below the predetermined level, then there is a negative determination of central starvation 73, and a new data set is selected according to protocol 70. It is to be understood that if only the method of Figure 6 is being employed, a warning may be issued for central starvation at steps 65 and 66.

If local refrigerant starvation is determined as in Fig. 4 and 5 in one or more cooling locations the stored data regarding these starvations remains and may be used (according to methods not further described in this disclosure) for issuing local starvation warnings. If, however, it is determined that the starvation is central, a central system warning is issued and the stored data regarding local starvation(s) is directed toward the central system warning.

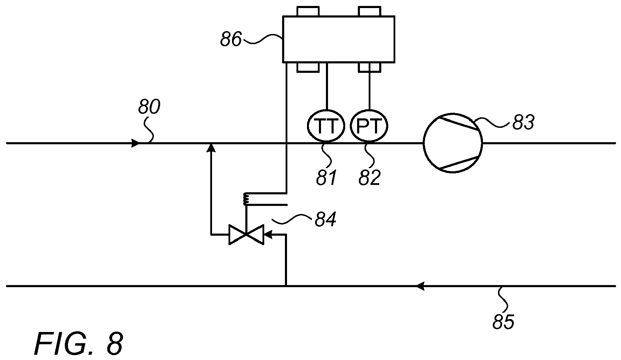

Fig. 8 shows an exemplary method of how liquid injection is used to maintain low suction line superheat in a refrigeration system. Liquid injection into the suction line 80 may be used to control the compressor rack suction line superheat, limiting it upwards. The function may be controlled on the basis of the superheat measured by the temperature sensor 81 and the pressure sensor 82 in the suction line leading to the compressor rack 83. In a controller 86, there may be a predetermined maximum superheat value or difference from set maximum superheat level at which liquid injection is set to start. As shown, the compressor rack suction line superheat is measured down-stream from the suction liquid injection valve 84 located in the liquid line 85, thus activation of liquid injection directly affects the measured SSH, thus 'masking' high SSH from the cooling locations that is used as indicator of general starvation of refrigerant in system. Liquid injection is not measured; rather the valve opening percentage is read from the compressor rack controller as a value between 0-100 % in which, for example, 0 % indicates no liquid injection and 100% indicates a high likelihood of "masked" high SSH. Thus liquid injection valve opening may be used instead of suction line superheat, in combination with MERS level, to determine if there is refrigerant starvation in the central system.

It is appreciated by persons skilled in the art that the present invention is not limited by what has been particularly shown and described hereinabove. Rather the scope of the present invention includes both combinations and subcombinations of various features described hereinabove as well as variations and modifications thereto which would occur to a person of skill in the art upon reading the above description and which are not in the prior art.

## Claims

1. A method for the detection of central refrigerant starvation in a refrigeration system comprising at least one refrigerant compressor serving multiple cooling locations, and a suction line leading to said at least one refrigerant compressor, said method comprising:
determining the suction line superheat;
selecting a representative group of cooling locations in said central refrigeration system, in each of which, it is to be determined if local refrigerant starvation exists;
determining for each cooling location in said representative group, whether local refrigerant starvation exists; and
determining that there is central refrigerant starvation in the system, if either:
(i) a proportional level of all cooling locations experiencing local refrigerant starvation in said representative group, exceeds a first predetermined level, or
(ii) said suction line superheat exceeds a predetermined superheat level, and a proportional level of all cooling locations experiencing local refrigerant starvation in said representative group exceeds a second predetermined level.

2. A method for the detection of central refrigerant starvation in a refrigeration system comprising at least one refrigerant compressor serving multiple cooling locations, a suction line leading to said at least one refrigerant compressor, at least one liquid injection valve located in said suction line, the opening of said liquid injection valve being controlled to maintain suction line superheat below a predetermined superheat level, said method comprising:
determining the opening of said liquid injection valve;
selecting a representative group of cooling locations in said refrigeration system, in each of which, it is to be determined if local refrigerant starvation exists;
determining for each cooling location in said representative group, whether local refrigerant starvation exists; and
determining that there is central refrigerant starvation in the system, if either of:
(i) a proportional level of all cooling locations experiencing local refrigerant starvation in said representative group exceeds a first predetermined level, or
(ii) said opening of said liquid injection valve exceeds a predefined level, and a proportional level of all cooling locations experiencing local refrigerant starvation in said representative group exceeds a second predetermined level.

3. A method according to claim 1, wherein said determination of central refrigerant starvation in a refrigeration system is corroborated by repeating a number of times over a preselected time interval, at least one of:
calculating if the proportional level of all cooling locations experiencing local refrigerant starvation in said representative group exceeds said first predetermined level, and
calculating if said suction line superheat exceeds said predetermined superheat level.

4. A method according to claim 2, wherein said determination of central refrigerant starvation in a refrigeration system is corroborated by repeating a number of times over a preselected time interval, at least one of:
calculating if the proportional level of all cooling locations experiencing local refrigerant starvation in said representative group exceeds said first predetermined level, and
calculating if the opening of said liquid injection valve is above said predefined level.

5. A method according to either of claims 3 or 4, wherein said preselected time interval is longer than the time needed to complete a defrost cycle in all of said cooling locations in said representative group.

6. A method according to any of the previous claims, wherein each of said cooling locations in said representative group comprises an expansion valve, an evaporator, a cooling coil, and a cold temperature sensor, and wherein determining whether local refrigerant starvation exists in a cooling location in said representative group comprises:
(a) measuring the opening of said expansion valve and determining if the opening is greater than a first predetermined value;
(b) calculating the evaporator superheat and determining if it is greater than a second predetermined value;
(c) obtaining the temperature difference between the evaporator air inlet temperature and the temperature indicated by said cold temperature sensor, and determining at least one of
(i) whether the deviation of said temperature difference from a normally expected temperature difference is greater than a third predetermined value, and
(ii) whether the temperature difference is less than a fourth predetermined value; and
(d) concluding that local starvation exists in said cooling location if said opening of said expansion valve exceeds said first predetermined value and said evaporator superheat exceeds said second predetermined value, and if at least one of (i) said deviation of said temperature difference from said normally expected temperature difference is greater than said third predetermined value and (ii) said temperature difference is less than said fourth predetermined value.

7. A method according to claim 6, wherein said cold temperature sensor is either (i) an evaporator outlet temperature sensor or (ii) a cooling coil temperature sensor.

8. A method according to either of claims 6 and 7, wherein steps (a) to (c) are performed in a cooling location over a period of time excluding one or more of:
(i) the time during which a defrost cycle is taking place at said cooling location;
(ii) a predetermined length of time after termination of said defrost cycle of said cooling location;
(iii) the time during which a door of said cooling location is open;
(iv) a predetermined length of time after any door of said cooling location has been opened; and
(v) a predetermined length of time after the commencement of cooling of said cooling location.

9. A method according to any of claims 6 to 8, further comprising the step of, in each of one or more cooling locations, repeating each of steps (a) to (c) a number of times over a preselected window of time, in order to corroborate said determination of local refrigerant starvation.

10. A method according to any of claims 6 to 9, wherein said normally expected temperature difference for a cooling location in said representative group is determined by:
a) obtaining temperature differences between the evaporator air inlet temperature and the temperature indicated by said cold temperature sensor multiple times over an interval of time;
b) establishing a distribution curve of said temperature differences; and
c) determining said normally expected temperature difference to be one of (i) a normal temperature difference based on said distribution curve and (ii) a mean average temperature difference based on said distribution curve and (iii) a predetermined percentile of said distribution curve.

11. A method according to any of claims 6 to 10, wherein said method further comprises determining that there is thermal overload in said cooling location if said opening of said expansion valve exceeds said first predetermined value and said evaporator superheat exceeds said second predetermined value, and if (i) said deviation of said temperature difference from said normally expected temperature difference is not greater than said third predetermined value and (ii) said temperature difference is not less than said fourth predetermined value.

12. A method according to any of claims 6 to 11, wherein, if it is determined that local starvation exists in one or more cooling locations in said representative group, generating one or more warnings of local starvation.

13. A method according to any claims 6 to 12, wherein if it is determined that there is central refrigerant starvation in the system, issuing a central warning and suppressing any existing warnings of local starvation.

14. A central refrigeration system comprising:
at least one refrigerant compressor, a plurality of cooling locations comprising a representative group, a suction line, and at least one module adapted to obtain data from said at least one compressor and from said cooling locations and to transmit at least a portion of said data to at least one processor, wherein said at least one processor is adapted to:
for each cooling location in said representative group, determine whether local refrigerant starvation exists;
determine suction line superheat; and
determine that there is refrigerant starvation in the central system, if either:
(i) a proportional level of cooling locations with local refrigerant starvation in said representative group exceeds a first predetermined level, or
(ii) said suction line superheat exceeds a predetermined superheat level, and a proportional level of cooling locations with local refrigerant starvation in said representative group exceeds a second predetermined level.

15. A central refrigeration system according to claim 14, wherein each of said cooling locations in said representative group comprises an expansion valve, an evaporator, a cooling coil, and a cold temperature sensor, and wherein determining whether local refrigerant starvation exists in a cooling location in said representative group comprises:
(a) determining if a measured opening of said expansion valve is greater than a first predetermined value;
(b) calculating the evaporator superheat and determining if it is greater than a second predetermined value;
(c) obtaining the temperature difference between the evaporator air inlet temperature and the temperature indicated by said cold temperature sensor, and determining at least one of
(i) whether the deviation of said temperature difference from a normally expected temperature difference is greater than a third predetermined value, and
(ii) whether the temperature difference is less than a fourth predetermined value; and
(d) concluding that local starvation exists in said cooling location if said opening of said expansion valve exceeds said first predetermined value and said evaporator superheat exceeds said second predetermined value, and if at least one of (i) said deviation of said temperature difference from said normally expected temperature difference is greater than said third predetermined value and (ii) said temperature difference is less than said fourth predetermined value.
